# FASCICULE DE BREVET EUROPEEN

(11) **EP 4 491 924 B1**
(45) Date de publication et mention de la délivrance du brevet: **25.03.2026**
(21) Numéro de dépôt: 24187701.8
(22) Date de dépôt: 10.07.2024
(51) Int. Cl.: F16L 3/137

(54) **SYSTÈME DE FIXATION D'UN ÉLÉMENT ET AÉRONEF COMPORTANT AU MOINS UN TEL SYSTÈME**
BEFESTIGUNGSSYSTEM FÜR EIN ELEMENT UND FLUGZEUG MIT MINDESTENS EINEM SOLCHEN SYSTEM
SYSTEM FOR ATTACHING AN ELEMENT AND AIRCRAFT COMPRISING AT LEAST ONE SUCH SYSTEM

(30) Priorité: 12.07.2023 FR 2307461
(43) Date de publication de la demande: 15.01.2025
(73) Titulaire: Airbus Operations (S.A.S.), 31060 Toulouse Cedex 9 (FR)
(72) Inventeur: MILLET, Gérard, 31060 TOULOUSE (FR); LOPEZ, Thierry, 31060 TOULOUSE (FR)
(74) Mandataire: Cabinet Le Guen Maillet

(56) Documents cités:
- EP-A1- 0 125 158
- EP-A1- 0 579 516
- WO-A1-2006/030725
- US-A1- 2007 057 124

## Description

### DOMAINE TECHNIQUE

La présente invention concerne un support pour un système de fixation permettant de fixer un élément. L'invention concerne plus particulièrement la fixation d'un élément se présentant sous la forme d'un ou plusieurs câbles ou canalisations.

### ÉTAT DE LA TECHNIQUE ANTÉRIEURE

Dans un aéronef, il arrive souvent que des câbles ou des canalisations doivent être fixés les uns aux autres, pour les maintenir ensemble et pour les guider dans l'aéronef sous la forme d'un ensemble appelé harnais.

Actuellement pour assurer une telle fixation des câbles entre eux, il est connu d'utiliser des colliers de serrage qui comportent classiquement un lien souple et une cage solidaire d'une première extrémité du lien. La cage comporte un tunnel pour recevoir une deuxième extrémité du lien et est équipée d'un système de blocage autorisant le déplacement du lien dans le tunnel selon une seule direction.

Un inconvénient de cette solution réside dans le fait que, selon les dimensions des éléments à fixer entre eux et/ou selon les matériaux dans lesquels ils sont fabriqués, il existe un risque que ces éléments soient endommagés par le collier de serrage. En effet, à l'endroit où la deuxième extrémité du lien pénètre dans la cage du collier de serrage, un angle est créé et engendre des pincements et/ou des frottements importants sur les éléments à fixer. Des éléments, et notamment des câbles électriques, sont fréquemment endommagés lors de l'utilisation de tels colliers de serrage, ce qui peut entraîner des pannes.

D'autres solutions, comme décrites dans les documents WO2006/057124, US2007/057124, EP0125158 et EP0579516, permettent de fixer des câbles mais ne résolvent pas les inconvénients précités.

Il est donc nécessaire de trouver une solution simple qui permette d'assurer une fixation fiable et n'endommageant pas les éléments à fixer entre eux.

### EXPOSÉ DE L'INVENTION

Un objet de la présente invention est de proposer un support pour un système de fixation qui permettent de fixer un élément de manière simple et rapide.

À cet effet, est proposé un support pour un système de fixation destiné à fixer un élément, ledit système de fixation comportant un collier de serrage présentant un lien souple et une cage solidaire d'une extrémité proximale du lien et présentant un tunnel, ledit support comportant :
- une base globalement rectiligne entre une première extrémité et une deuxième extrémité, comportant, à la première extrémité et sur une première face de ladite base, un logement dans lequel ladite cage dudit collier de serrage est destinée à être logée, ladite base comportant une ouverture qui débouche dans le logement, ladite ouverture étant destinée à être disposée en vis-à-vis dudit tunnel dudit collier et permettre le passage d'une extrémité distale dudit lien, et entre le logement et la deuxième extrémité, un premier canal de guidage dans lequel ledit lien dudit collier de serrage est destiné à être enfilé, et

- un montant de support solidaire de la base au niveau de la deuxième extrémité et d'une deuxième face de ladite base opposée à ladite première face de ladite base et s'étendant à partir de la deuxième extrémité en s'éloignant de la base et en se rapprochant de la première extrémité de telle sorte qu'une extrémité libre dudit montant est disposée à distance et globalement en vis-à-vis de l'ouverture.

Ladite extrémité distale dudit lien est destinée à : pénétrer dans ledit premier canal, entourer ledit élément, puis pénétrer successivement dans l'ouverture de la base et dans ledit tunnel de ladite cage.

Le support de l'invention permet donc d'intercaler une surface d'appui, ou de protection, entre l'élément à fixer et le lien du collier de serrage à l'endroit où l'extrémité distale du lien pénètre dans la cage du collier de serrage, c'est-à-dire à l'endroit critique où un angle est classiquement formé et où les risques d'endommagement de l'élément sont habituellement élevés. De cette manière, l'élément peut être fixé simplement tout en évitant les détériorations non souhaitées de ce dernier.

Avantageusement, ledit montant est courbé, le centre de courbure dudit montant étant situé à l'opposé de ladite base par rapport audit montant.

Selon un aspect particulier de l'invention, ledit montant est élastique et ladite base comporte une portion s'étendant entre ledit premier canal et ladite deuxième extrémité qui est également élastique.

Selon un autre aspect particulier de l'invention, ledit logement comporte au moins une tige destinée à maintenir ladite cage, chaque tige s'étendant globalement perpendiculairement à ladite base, une extrémité libre de chaque tige comportant une dent faisant saillie globalement parallèlement à ladite première face vers la deuxième extrémité. Ladite cage dudit collier est destinée à être maintenue dans ledit logement par contact avec la base, ladite au moins une tige et ladite au moins une dent.

Selon un aspect particulier de l'invention, ladite base comporte, au niveau de la deuxième extrémité, un premier moyen destiné à guider ledit lien.

Selon un autre aspect particulier de l'invention, ledit montant comporte, au niveau de son extrémité libre, un deuxième moyen destiné à guider ledit lien.

Selon encore un autre aspect particulier de l'invention, l'un ou chaque moyen destiné à guider ledit lien prend la forme d'une fourchette à deux dents et le lien est destiné à être guidé entre les deux dents.

Selon un aspect particulier de l'invention, ledit montant comporte, au niveau de son extrémité libre, un deuxième canal destiné à guider ledit lien.

L'invention concerne également un système de fixation destiné à fixer un élément, ledit système comportant :
- un collier de serrage présentant un lien souple et une cage solidaire d'une extrémité proximale du lien et présentant un tunnel pour recevoir une extrémité distale du lien, où la cage est équipée d'un système de blocage autorisant le déplacement du lien dans le tunnel selon une seule direction ; et

- un support tel que décrit précédemment.

L'invention concerne en outre un aéronef comportant au moins un élément à fixer et au moins un système de fixation dudit au moins un élément tel que décrit précédemment.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre une vue en perspective d'un système de fixation selon un exemple de réalisation de l'invention ;
[Fig. 2] illustre une autre vue en perspective du système de fixation de la Fig. 1 ;
[Fig. 3] est une vue en perspective illustrant un support selon l'invention qui est mis en œuvre dans le système de fixation de la Fig. 1 ;
[Fig. 4] illustre une vue en perspective d'une variante du système de fixation de la Fig. 1 ; et
[Fig. 5] illustre un aéronef comportant une pluralité de supports de fixation selon l'invention.

### EXPOSÉ DÉTAILLÉ DE MODES DE RÉALISATION

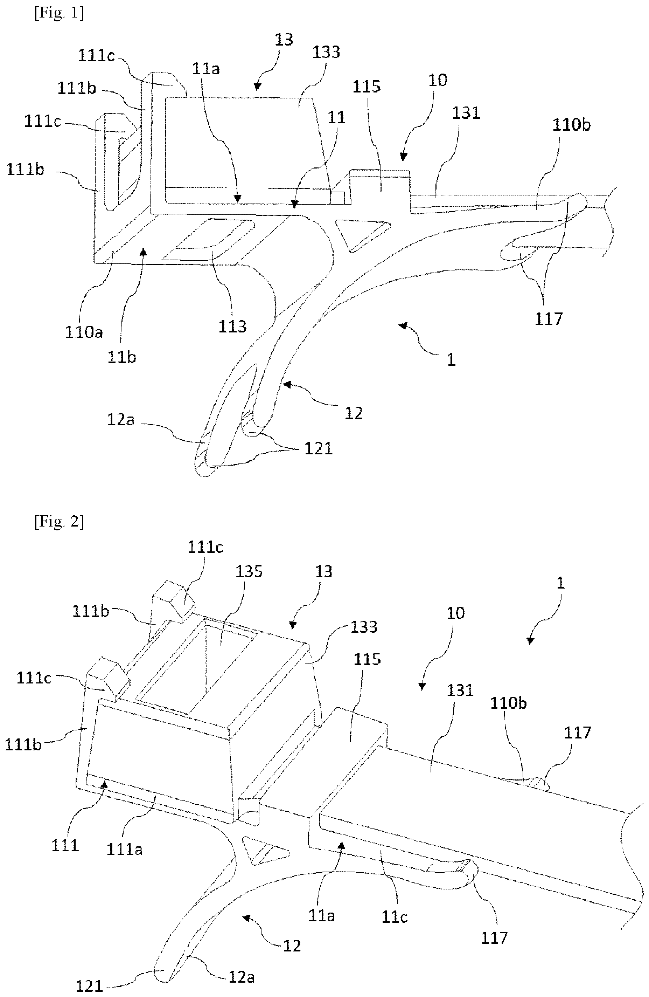

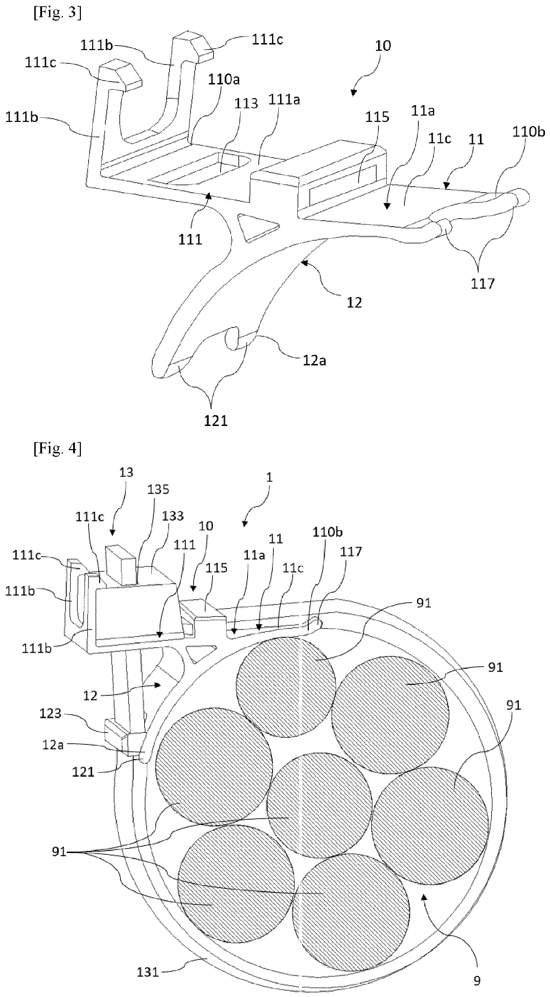

La Fig. 1 montre un système de fixation 1 qui est appelé par la suite « système ». Le système 1 permet de fixer un élément 9 qui peut prendre différentes formes. L'élément 9 peut être constitué d'un ou plusieurs câbles 91 (comme illustré sur la Fig.4) ou canalisations, ou tout autre élément à fixer.

Le système 1 comporte un collier de serrage 13 et un support 10 selon l'invention.

Le collier de serrage 13 est réalisé par exemple en plastique. Il prend par exemple la forme d'un collier de serrage connu sous le nom Ty-Rap ^{®}.

Le collier de serrage 13 comporte un lien 131 souple et une cage 133 solidaire d'une extrémité proximale du lien 131. La cage 133 est traversée par un tunnel 135 dans lequel s'insère l'extrémité distale du lien 131.

La cage 133 est équipée d'un système de blocage autorisant le déplacement du lien 131 dans le tunnel 135 selon une seule direction, dite de serrage et empêchant le déplacement du lien 131 dans le tunnel selon une direction opposée à la direction de serrage.

Selon un mode de réalisation particulier, le système de blocage comporte un système de cliquet qui est logé dans le tunnel 135 et de dents réalisées sur l'une des faces du lien 131. Les dents interagissent avec le système de cliquet pour autoriser le déplacement du lien 131 dans le tunnel 135 selon la direction de serrage et interdit le déplacement du lien 131 dans la direction opposée. Selon un mode de réalisation particulier, le système de blocage peut être libérable pour libérer le lien 131 afin de le sortir du tunnel 135.

Le support 10 selon l'invention, dont un premier mode de réalisation est représenté de manière isolée sur la Fig. 3, présente une base 11 globalement rectiligne entre une première extrémité 110a et une deuxième extrémité 110b. La base 11 comporte, à la première extrémité 110a et sur une première face 11a (c'est-à-dire la face supérieure selon l'orientation du support 10 sur les Figs. 1 à 3), un logement 111 dans lequel la cage 133 du collier de serrage 13 est destinée à être logée.

La base 11 comporte une ouverture 113 traversante qui débouche dans le logement 111 et en vis-à-vis du tunnel 135 de la cage 133 lorsque le collier de serrage 13 est logé dans le logement 111. L'ouverture 113 est destinée à permettre le passage de l'extrémité distale du lien 131 du collier de serrage 13.

La base 11 comporte, dans le prolongement du logement 111 et à l'opposé de la première extrémité 110a, c'est-à-dire entre le logement 111 et la deuxième extrémité 110b, un premier canal 115 de guidage et de maintien dans lequel le lien 131 du collier de serrage 13 est destiné à être enfilé. Le premier canal 115 est destiné à assurer un positionnement et un maintien optimal du lien 131 par rapport au support 10. De plus, le premier canal 115 étant disposé à proximité du logement 111, le premier canal 115 participe également au bon maintien de la cage 133 lorsque le collier de serrage 13 est logé dans le logement 111. Le premier canal 115 est donc destiné à éviter la désolidarisation du collier de serrage 13 et du support 10.

Le support 10 comporte en outre un montant 12 de support solidaire de la base 11 au niveau de la deuxième extrémité 110b, et d'une deuxième face 11b opposée à la première face 11a de la base 11 (c'est-à-dire la face inférieure selon l'orientation du support 10 sur les Figs. 1 à 3). Plus particulièrement, le montant 12 s'étend à partir de la deuxième extrémité 110b de la base 11 en s'éloignant de la base 11 et en se rapprochant de la première extrémité 110a de telle sorte que l'extrémité libre 12a du montant 12, c'est-à-dire l'extrémité opposée à la base 11, soit disposée à distance et globalement en vis-à-vis de l'ouverture 113. En d'autres termes, le montant 12 s'étend de manière inclinée par rapport à la base 11, ici en-dessous de la base 11 selon l'orientation du support 10 sur les Figs 1 à 3.

Pour fixer l'élément 9, la cage 133 du collier de serrage 13 est destinée à être logée et maintenue dans le logement 111 de la base 11. L'extrémité distale du lien 131 est destinée à pénétrer dans le premier canal 115 et entourer l'élément 9. Enfin, l'extrémité distale du lien 131 est destinée à pénétrer successivement dans l'ouverture 113 de la base 11 et dans le tunnel 135 de la cage 133.

Les moyens de blocage du collier de serrage 13 permettent d'immobiliser le lien 131 et d'assurer la fixation de l'ensemble.

Le montant 12 est donc destiné à constituer une surface d'appui, ou de protection, disposée entre l'élément 9 et le lien 131 du collier de serrage 13 à l'endroit où l'extrémité distale du lien 131 pénètre dans la cage 133 du collier de serrage 13, c'est-à-dire à l'endroit critique où un angle est classiquement formé et où les risques d'endommagement de l'élément 9 sont habituellement élevés. De cette manière, les risques de pincement et de frottement du collier de serrage 13 sur l'élément 9 au niveau de cet endroit critique sont évités. L'invention permet donc de fixer simplement l'élément 9 avec un collier de serrage 13 tout en évitant les détériorations non souhaitées de ce dernier.

Préférentiellement, et comme illustré dans cet exemple, le montant 12 est courbé pour s'adapter au mieux à l'élément 9 à fixer, qui présente ici une section de forme globalement circulaire. Le centre de courbure du montant 12 est situé à l'opposé de la base 11 par rapport au montant 12.

Le montant 12 est de préférence élastique, telle une lame de ressort. De la même manière, la portion 11c de la base 11 s'étendant entre le premier canal 115 et la deuxième extrémité 110b de la base 11 est élastique. Le fait que le montant 12 et la portion 11c soient élastiques permet d'encore mieux adapter le support 10 aux formes et aux dimensions variables des éléments 9 à fixer.

De plus, cette élasticité du montant 12 et de la portion 11c de la base 11 permet également de fournir une courbure douce, c'est-à-dire progressive, au support 10 de sorte à éviter les risques de pincement et de frottement du support 10 et du collier de serrage 13 contre l'élément 9 à fixer.

Dans le mode de réalisation de l'invention présenté sur les Figs. 1 à 3, le logement 111 comporte au moins une tige 111b destinée à maintenir la cage 133 dans l'empreinte 111a. Dans cet exemple, le logement 111 comporte deux tiges 111b disposées parallèlement et globalement dans les coins de la base 11 au niveau de la première extrémité 110a.

Les tiges 111b s'étendent globalement perpendiculairement à la base 11 à partir de la première face 11a. En d'autres termes, les tiges 111b s'étendent vers le haut selon l'orientation du support sur les Figs 1 à 3.

L'extrémité libre de la tige 111b, c'est-à-dire l'extrémité opposée à la base 11, comporte une dent 111c faisant saillie globalement parallèlement à la première face 11a de la base 11 et vers la deuxième extrémité 110b.

De cette manière, la cage 133 du collier 13 est destinée à être maintenue dans le logement 111 par contact, c'est-à-dire par engagement, avec la base 11, les tiges 111b et les dents 111c. Ainsi, le collier de serrage 13 peut être maintenu solidaire du support 10 même en cas de rupture du lien 131. De plus, le logement 111 permet d'éviter tout déplacement non souhaité du collier de serrage 13 par rapport au support 10.

Dans une variante non illustrée, il serait envisageable de disposer le premier canal 115 à une distance de la première extrémité 110a correspondant aux dimensions de la cage 133 de sorte à ajouter un point de contact supplémentaire et améliorer encore le maintien de la cage 133 du collier de serrage 13 dans le logement 111.

Dans le mode de réalisation de l'invention présenté sur les Figs. 1à 3, la base 11 comporte, au niveau de la deuxième extrémité 110b, un premier moyen 117 destiné à guider le lien 131. De la même manière, le montant 12 comporte, au niveau de son extrémité libre 12a, un deuxième moyen 121 destiné à guider le lien 131.

Les moyens 117 et 121 de guidage sont destinés à assurer un centrage et un positionnement optimaux du lien 131 du collier de serrage 13 sur le support 10 et sur l'élément 9. Ainsi, les risques de pincement, de frottement et donc d'endommagement de l'élément 9 sont évités.

Par exemple, le premier 117 et/ou le deuxième 121 moyens de guidage prennent la forme d'une fourchette à deux dents entre lesquelles le lien 131 est destiné à être inséré et guidé.

Dans une variante de réalisation illustrée sur la Fig. 4, le montant 12 comporte en outre, au niveau de son extrémité libre 12a et à proximité de la deuxième fourchette 121, un deuxième canal 123 destiné à guider et maintenir le lien 131. Le deuxième canal 123 permet d'assurer un positionnement et un maintien optimaux du lien 131 par rapport au support 10.

En outre, la mise en œuvre des premier 115 et deuxième 123 canaux permet d'empêcher la désolidarisation du collier de serrage 13 et du support 10 en cas de rupture inattendue du lien 131. Une telle mise en œuvre permet est destinée à éviter la perte d'un des éléments du système 1, et cela quel que soit l'endroit de la rupture du lien 131 (par exemple entre la cage 133 et le premier canal 115, entre les premier 115 et deuxième 123 canaux, ou entre le deuxième canal 123 et la cage 133, notamment).

Un tel support 10 permet de fournir une solution simple et peu coûteuse de fixation d'un élément 9. De plus, le support 10 permet d'utiliser des colliers de serrage 13 connus et habituellement utilisés, tout en s'affranchissant des risques d'endommagement de l'élément 9 par ce type de collier de serrage.

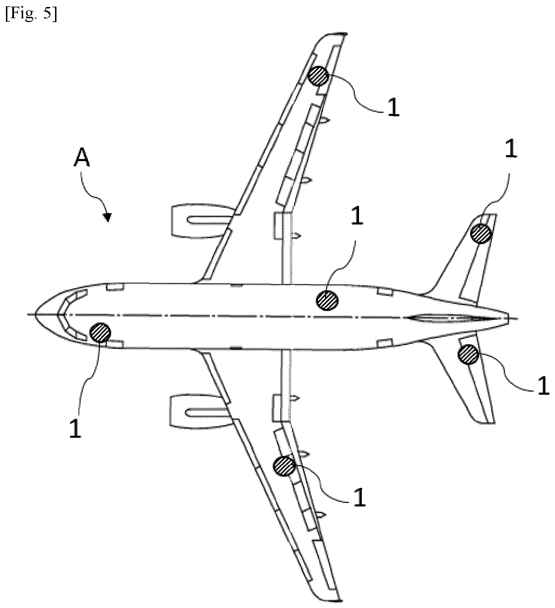

La Fig. 5 représente un aéronef A comprenant au moins un système 1 de fixation d'un élément 9. L'usage de tels systèmes 1 de fixation dans un aéronef permet avantageusement de faciliter les opérations de montage des systèmes électriques, électroniques ou fluidiques, notamment dans des endroits exigus, et d'accroître ainsi la productivité. Avantageusement, le système 1 de fixation peut être livré sous la forme d'un kit comprenant un support 1 sur lequel la cage 133 du collier de serrage 13 est déjà logée dans le logement 111 du support 10.

## Revendications

1. Support (10) pour un système de fixation (1) destiné à fixer un élément (9), ledit système de fixation (1) comportant un collier de serrage (13) présentant un lien (131) souple et une cage (133) solidaire d'une extrémité proximale du lien (131) et présentant un tunnel (135), ledit support (10) comportant :
- une base (11) globalement rectiligne entre une première extrémité (110a) et une deuxième extrémité (110b), comportant, à la première extrémité (110a) et sur une première face (11a) de ladite base (11), un logement (111) dans lequel ladite cage (133) dudit collier de serrage (13) est destinée à être logée, ladite base (11) comportant une ouverture (113) qui débouche dans le logement (111), ladite ouverture (113) étant destinée à être disposée en vis-à-vis dudit tunnel (135) dudit collier (13) et permettre le passage d'une extrémité distale dudit lien (131), et entre le logement (111) et la deuxième extrémité (110b), un premier canal (115) de guidage dans lequel ledit lien (131) dudit collier de serrage (13) est destiné à être enfilé, et
- un montant (12) de support solidaire de la base (11) au niveau de la deuxième extrémité (110b) et d'une deuxième face (11b) de ladite base (11) opposée à ladite première face (11a) de ladite base (11) et s'étendant à partir de la deuxième extrémité (110b) en s'éloignant de la base (11) et en se rapprochant de la première extrémité (110a) de telle sorte qu'une extrémité libre (12a) dudit montant (12) est disposée à distance et globalement en vis-à-vis de l'ouverture (113) ;
où ladite extrémité distale dudit lien (131) est destinée à : pénétrer dans ledit premier canal (115), entourer ledit élément (9), puis pénétrer successivement dans l'ouverture (113) de la base (11) et dans ledit tunnel (135) de ladite cage (133).

2. Support (10) selon la revendication 1, **caractérisé en ce que** ledit montant (12) est courbé, le centre de courbure dudit montant (12) étant situé à l'opposé de ladite base (11) par rapport audit montant (12).

3. Support (10) selon l'une des revendications 1 et 2, **caractérisé en ce que** ledit montant (12) est élastique et **en ce que** ladite base (11) comporte une portion (11c) s'étendant entre ledit premier canal (115) et ladite deuxième extrémité (110b) qui est élastique.

4. Support (10) selon l'une quelconque des revendications 1 à 3, **caractérisé en ce que** ledit logement (111) comporte au moins une tige (111b) destinée à maintenir ladite cage (133), chaque tige (111b) s'étendant globalement perpendiculairement à ladite base (11), une extrémité libre de chaque tige (111b) comportant une dent (111c) faisant saillie globalement parallèlement à ladite première face (11a) vers la deuxième extrémité (110b),
où ladite cage (133) dudit collier (13) est destinée à être maintenue dans ledit logement (111) par contact avec la base (11), ladite au moins une tige (111b) et ladite au moins une dent (111c).

5. Support (10) selon l'une quelconque des revendications 1 à 4, **caractérisé en ce que** ladite base (11) comporte, au niveau de la deuxième extrémité (110b), un premier moyen (117) destiné à guider ledit lien (131).

6. Support (10) selon l'une quelconque des revendications 1 à 5, **caractérisé en ce que** ledit montant (12) comporte, au niveau de son extrémité libre (12a), un deuxième moyen (121) destiné à guider ledit lien (131).

7. Support (10) selon l'une des revendications 5 ou 6, **caractérisé en ce que** l'un ou chaque moyen (117, 121) prend la forme d'une fourchette à deux dents et **en ce que** le lien (131) est destiné à être guidé entre les deux dents.

8. Support (10) selon l'une quelconque des revendications 1 à 7, **caractérisé en ce que** ledit montant (12) comporte, au niveau de son extrémité libre (12a), un deuxième canal (123) destiné à guider ledit dudit lien (131).

9. Système de fixation (1) destiné à fixer un élément (9), ledit système (1) comportant :
- un collier de serrage (13) présentant un lien (131) souple et une cage (133) solidaire d'une extrémité proximale du lien (131) et présentant un tunnel (135) pour recevoir une extrémité distale du lien (131), où la cage (133) est équipée d'un système de blocage autorisant le déplacement du lien (131) dans le tunnel (135) selon une seule direction ; et
- un support (10) selon l'une des revendications 1 à 8.

10. Aéronef (A) comportant au moins un élément (9) à fixer et au moins un système de fixation (1) dudit au moins un élément (9) selon la revendication 9.

## Patentansprüche

1. Träger (10) für ein Befestigungssystem (1), das dazu bestimmt ist, ein Element (9) zu befestigen, wobei das Befestigungssystem (1) einen Kabelbinder (13) umfasst, der ein nachgiebiges Band (131) und einen Käfig (133), der mit einem proximalen Ende des Bands (131) fest verbunden ist und einen Tunnel (135) aufweist, aufweist, wobei der Träger (10) Folgendes umfasst:
- eine im Wesentlichen geradlinige Basis (11) zwischen einem ersten Ende (110a) und einem zweiten Ende (110b), die Folgendes umfasst: an dem ersten Ende (110a) und auf einer ersten Seite (11a) der Basis (11) eine Aufnahme (111), in der der Käfig (133) des Kabelbinders (13) aufgenommen werden soll, wobei die Basis (11) eine Öffnung (113) umfasst, die in der Aufnahme (111) mündet, wobei die Öffnung (113) dazu bestimmt ist, gegenüber dem Tunnel (135) des Binders (13) angeordnet zu sein und den Durchgang eines distalen Endes des Bands (131) zu gestatten, und zwischen der Aufnahme (111) und dem zweiten Ende (110b) einen ersten Führungskanal (115), in den das Band (131) des Kabelbinders (13) eingefädelt werden soll, und
- eine Trägerstütze (12), die an dem zweiten Ende (110b) und auf einer zweiten Seite (11b) der Basis (11), die zu der ersten Seite (11a) der Basis (11) entgegengesetzt ist, fest mit der Basis (11) verbunden ist und sich von dem zweiten Ende (110b) erstreckt, wobei sie sich von der Basis (11) entfernt und sich dem ersten Ende (110a) nähert, sodass ein freies Ende (12a) der Stütze (12) beabstandet von und im Wesentlichen gegenüber der Öffnung (113) angeordnet ist;
wobei das distale Ende des Bands (131) zu Folgendem bestimmt ist: Eintreten in den ersten Kanal (115), Umringen des Elements (9), dann sukzessives Eintreten in die Öffnung (113) der Basis (11) und in den Tunnel (135) des Käfigs (133).

2. Träger (10) nach Anspruch 1, **dadurch gekennzeichnet, dass** die Stütze (12) gekrümmt ist, wobei sich der Krümmungsmittelpunkt der Stütze (12) in Bezug auf die Stütze (12) entgegengesetzt zu der Basis (11) befindet.

3. Träger (10) nach einem der Ansprüche 1 und 2, **dadurch gekennzeichnet, dass** die Stütze (12) elastisch ist und dass die Basis (11) einen Abschnitt (11c), der sich zwischen dem ersten Kanal (115) und dem zweiten Ende (110b) erstreckt, umfasst, der elastisch ist.

4. Träger (10) nach einem der Ansprüche 1 bis 3, **dadurch gekennzeichnet, dass** die Aufnahme (111) mindestens einen Steg (111b) umfasst, der dazu bestimmt ist, den Käfig (133) zu halten, wobei sich jeder Steg (111b) im Wesentlichen senkrecht zu der Basis (11) erstreckt, wobei ein freies Ende jedes Stegs (111b) eine Zinke (111c) umfasst, die im Wesentlichen parallel zu der ersten Seite (11a) zu dem zweiten Ende (110b) hin vorsteht,
wobei der Käfig (133) des Binders (13) dazu bestimmt ist, durch Kontakt mit der Basis (11), dem mindestens einen Steg (111b) und der mindestens einen Zinke (111c) in der Aufnahme (111) gehalten zu werden.

5. Träger (10) nach einem der Ansprüche 1 bis 4, **dadurch gekennzeichnet, dass** die Basis (11) an dem zweiten Ende (110b) ein erstes Mittel (117) umfasst, das dazu bestimmt ist, das Band (131) zu führen.

6. Träger (10) nach einem der Ansprüche 1 bis 5, **dadurch gekennzeichnet, dass** die Stütze (12) an ihrem freien Ende (12a) ein zweites Mittel (121) umfasst, das dazu bestimmt ist, das Band (131) zu führen.

7. Träger (10) nach einem der Ansprüche 5 oder 6, **dadurch gekennzeichnet, dass** ein oder jedes Mittel (117, 121) die Form einer Gabel mit zwei Zinken aufweist und dass das Band (131) dazu bestimmt ist, zwischen den zwei Zinken geführt zu werden.

8. Träger (10) nach einem der Ansprüche 1 bis 7, **dadurch gekennzeichnet, dass** die Stütze (12) an ihrem freien Ende (12a) einen zweiten Kanal (123) umfasst, der dazu bestimmt ist, das Band (131) zu führen.

9. Befestigungssystem (1), das dazu bestimmt ist, ein Element (9) zu befestigen, wobei das System (1) Folgendes umfasst:
- einen Kabelbinder (13), der ein nachgiebiges Band (131) und einen Käfig (133), der mit einem proximalen Ende des Bands (131) fest verbunden ist und einen Tunnel (135) zur Aufnahme eines distalen Endes des Bands (131) aufweist, aufweist, wobei der Käfig (133) über ein Blockiersystem verfügt, das die Bewegung des Bands (131) in dem Tunnel (135) in nur einer Richtung gestattet; und
- einen Träger (10) nach einem der Ansprüche 1 bis 8.

10. Flugzeug (A), das mindestens ein zu befestigendes Element (9) und mindestens ein Befestigungssystem (1) für das mindestens eine Element (9) nach Anspruch 9 umfasst.

## Claims

1. Support (10) for a fixing system (1) intended to fix an element (9), said fixing system (1) comprising a hose clamp (13) having a flexible link (131) and a cage (133) secured to a proximal end of the link (131) and having a tunnel (135), said support (10) comprising:
- a base (11) that is globally rectilinear between a first end (110a) and a second end (110b), comprising, at the first end (110a) and on a first face (11a) of said base (11), a recess (111) in which said cage (133) of said hose clamp (13) is intended to be housed, said base (11) comprising an aperture (113) which emerges in the recess (111), said aperture (113) being intended to be disposed facing said tunnel (135) of said hose clamp (13) and allow the passage of a distal end of said link (131), and between the housing (111) and the second end (110b), a first guiding channel (115) into which said link (131) of said hose clamp (13) is intended to be fitted, and
- a support upright (12) secured to the base (11) at the second end (110b) and to a second face (11b) of said base (11) opposite said first face (11a) of said base (11) and extending from the second end (110b) by moving away from the base (11) and by approaching the first end (110a) such that a free end (12a) of said upright (12) is disposed at a distance from and globally facing the aperture (113); in which said distal end of said link (131) is intended to: penetrate into said first channel (115), surround said element (9), then penetrate in succession into the aperture (113) of the base (11) and into said tunnel (135) of said cage (133).

2. Support (10) according to claim 1, **characterized in that** said upright (12) is curved, the centre of curvature of said upright (12) being situated opposite said base (11) with respect to said upright (12).

3. Support (10) according to one of claims 1 and 2, **characterized in that** said upright (12) is elastic and **in that** said base (11) comprises a portion (11c) extending between said first channel (115) and said second end (110b) which is elastic.

4. Support (10) according to any of claims 1 to 3, **characterized in that** said recess (111) comprises at least one rod (111b) intended to hold said cage (133), each rod (111b) extending globally at right angles to said base (11), a free end of each rod (111b) comprising a tooth (111c) protruding globally parallel to said first face (11a) towards the second end (110b),
in which said cage (133) of said hose clamp (13) is intended to be held in said recess (111) by contact with the base (11), said at least one rod (111b) and said at least one tooth (111c).

5. Support (10) according to any of claims 1 to 4, **characterized in that** said base (11) comprises, at the second end (110b), a first means (117) intended to guide said link (131).

6. Support (10) according to any of claims 1 to 5, **characterized in that** said upright (12) comprises, at its free end (12a), a second means (121) intended to guide said link (131).

7. Support (10) according to one of claims 5 or 6, **characterized in that** one or each of said guiding means (117, 121) takes the form of a fork with two teeth and **in that** the link (131) is intended to be guided between the two teeth.

8. Support (10) according to any of claims 1 to 7, **characterized in that** said upright (12) comprises, at its free end (12a), a second channel (123) intended to guide said link (131).

9. Fixing system (1) intended to fix an element (9), said system (1) comprising:
- a hose clamp (13) having a flexible link (131) and a cage (133) secured to a proximal end of the link (131) and having a tunnel (135) for receiving a distal end of the link (131), in which the cage (133) is equipped with a blocking system allowing the displacement of the link (131) in the tunnel (135) in a single direction; and
- a support (10) according to any of claims 1 to 8.

10. Aircraft (A) comprising at least one element (9) to be fixed and at least one system (1) for fixing said at least one element (9) according to Claim 9.
